# EUROPEAN PATENT APPLICATION

(11) **EP 2 377 732 A1**
(43) Date of publication of application: **19.10.2011**
(21) Application number: 11161852.6
(22) Date of filing: 11.04.2011
(51) Int. Cl.: B60S 1/34

(54) **WINDSCREEN WIPER DEVICE**

(30) Priority: 16.04.2010 IT PR20100028
(71) Applicant: Escar S.r.l., 29016 Cortemaggiore (PC) (IT)
(72) Inventor: Franchi, Giuseppe, 29016 Cortemaggiore (PC) (IT)
(74) Representative: Gotra, Stefano

(57) **Abstract**

A glass-cleaning device comprises an articulated support mechanism (2), having a support portion (3) to carry a glass-cleaning brush (4), that is responsible for moving the support portion (3) around a fulcrum point (A; B), which comprises an anchorage portion (7), suitable for being stably attached to a glass-cleaning brush (4) and mounted movably on the support portion (3) to allow a variation of orientation of the glass-cleaning brush (4) with respect to the support portion (3). The glass-cleaning device (1) furthermore comprises movement means (8), active between the support portion (3) and the anchorage portion (7) to alter the orientation of the glass-cleaning brush (4) with respect to the support portion (4).

## Description

The present invention has as its subject a glass-cleaning device, commonly called a "windscreen wiper", particularly of the type usable for cleaning glasses (windscreens, rear windows etc.) of vehicles.

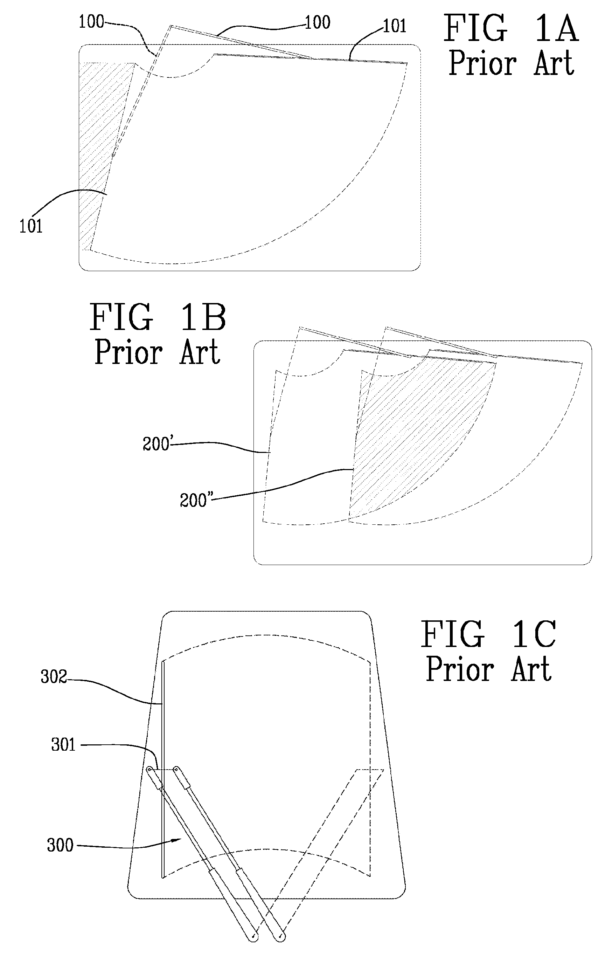

Glass-cleaning devices are currently known of the type with a brush, (illustrated in figure 1A) or, for glasses of great length, with two brushes (figure 1B, 1C).

Glass-cleaning devices with one brush, as illustrated in figure 1A, comprise a rod 100 hinged to the frame of the vehicle, at the end of which is fixed a glass-cleaning brush 101. Because of the rigid configuration of this solution, the brush can travel exclusively a circular path around a hinging point of the rod on the vehicle. The surface on which the brush acts is very limited, especially in the case of long glasses.

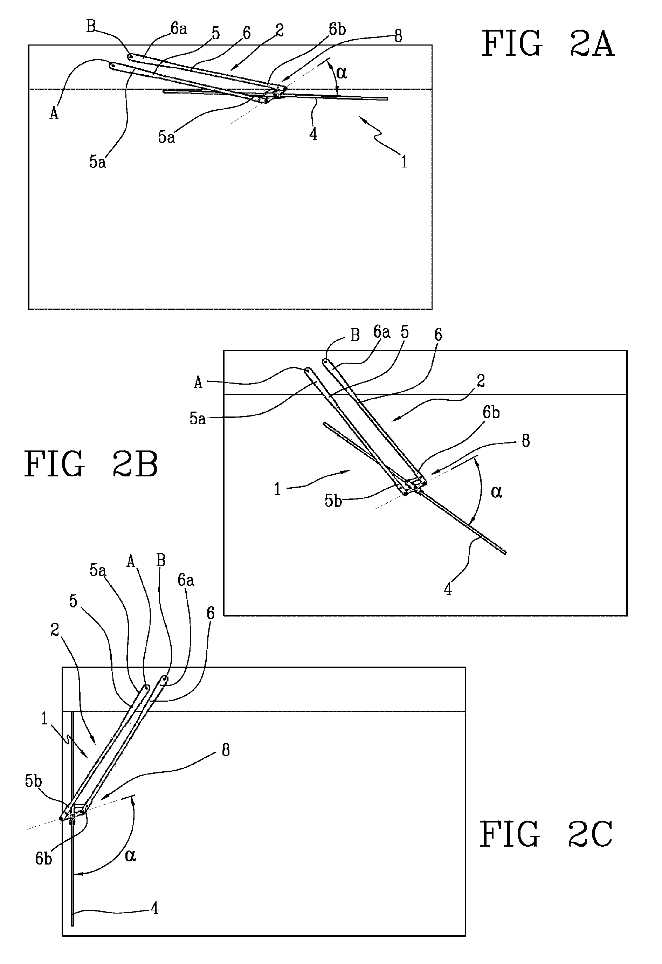

Figure 1B shows a known solution comprising two brushes 200', 200", which exploits the use of two devices of the type illustrated in figure 2A, with partial overlapping of the surface of action in order to achieve the cleaning of long glasses. This solution, too, being of a rigid configuration, leaves large areas of the glass uncleaned.

The solution illustrated in figure 1C provides instead for the use of an articulated parallelogram 300 which has a support rod 301 intended to maintain its orientation invariable during the movement of the pantograph 300. To the support rod 301 is stably fixed a brush 302 which also has a fixed orientation during its movement over the glass. It follows that this solution is not suitable for glasses of trapezoidal form, since in the two extreme positions the brush always remains oriented in the same direction (substantially perpendicular to the base of the glass) and this prevents the brush adequately following the inclined sides of the glass.

All the known embodiments described above are afflicted by the disadvantage of not being able to guarantee the cleaning of sufficient parts of the glass, which remain covered with drops of water and impair correct visibility by the driver.

Furthermore, with particular reference to the use of two or more brushes for cleaning glasses with a large surface area, devices of known type are penalised by the need to use high-powered motors, sufficient for moving the brushes simultaneously, and complex lever mechanisms for connecting the brushes to the motor. On the one hand this considerably increases the cost of these devices, and on the other it requires large dimensions which often clash with design requirements incompatible with such dimensions (for example it can be difficult to install a complex lever mechanism for moving two or more brushes with respective motors at the upper edge of the glass).

In this context, the technical objective underlying the present invention is to provide a glass-cleaning device which obviates the drawbacks in the prior art as described herein above.

In particular, an aim of the present invention is to make available a glass-cleaning device capable of improving the area of the glass subject to cleaning by the brushes.

Furthermore, it is an object of the present invention to make available a glass-cleaning device which has high constructional simplicity and is inexpensive to produce. A further object is to create a glass-cleaning device which can be usefully applied also to rear window (for example of vans) and to the upper edge of the glass to be cleaned (when there is no space at the bottom to anchor the device to the vehicle).

The set technical task and aims are substantially attained by a glass-cleaning device comprising the technical characteristics set out in one or more of the appended claims.

Further characteristics and advantages of the present invention will become more apparent from the following approximate, and hence non-limiting, description of a preferred, but not exclusive, embodiment of a glass-cleaning device, as illustrated in the appended drawings, in which:
- figures 1A-1C are schematic representations of glass-cleaning devices of known type;
- figures 2A-2C are front views of a glass-cleaning device according to the present invention and in accordance with different operating positions;
- figure 3 is a perspective view of a part of the device illustrated in figures 2A-2C and in accordance with a first embodiment;
- figure 4 is an exploded view of the part shown in figure 3;
- figure 5 is a perspective view of the part shown in figure 3, in accordance with a second embodiment;
- figures 6A-6C are schematised views of a glass-cleaning device according to the present invention, aimed at representing its operating characteristics. With reference to the attached drawings, no. 1 comprehensively represents a glass-cleaning device according to the present invention, which is applicable to windscreens, rear windows of cars, vans or more generally to any type of vehicle.

Device 1 comprises an articulated support mechanism 2 having a support portion 3 responsible for supporting a glass-cleaning brush 4.

The articulated support mechanism 2 is responsible for moving the support portion 3 around a fixing point defined, in general, by a point of attachment of the glass-cleaning device 1 to the frame of a vehicle.

In more detail, the articulated support mechanism 2 is responsible for moving the support portion 3 along a curved path, preferably a path substantially forming an arc of circumference, around a point of attachment of the glass-cleaning device 1 to the frame of a vehicle.

This creates a roto-translation of the support portion 3 along the above-mentioned curved path

In order to create the movement of the support portion 3, the articulated support mechanism 2 comprises an articulated quadrilateral, preferably an articulated parallelogram, having a pair of rods 5, 6, pivoted on one side to opposite ends of a support portion 3 and pivoted on the other side to the frame of the vehicle.

In other words, the support portion 3 comprises a connecting rod (from here on, the terms 'support portion 3' and 'connecting rod 3' will be used interchangeably), which is hinged at its ends to first ends 5a, 6a, of the above-mentioned rods 5, 6 of the articulated quadrilateral, rods 5, 6 at their second ends 5b, 6b being hingeable to the frame of the vehicle.

It follows that, by hinging the second ends 5b, 6b of the rods 5, 6 to the frame of the vehicle at two fulcrum points "A", "B", distinct from each other, the rotation of the articulated quadrilateral brings about a roto-translation of the support portion 3 about fulcrum points "A", "B", along a trajectory which is substantially similar to an arc of circumference. Support portion 3 is thus the side of the articulated quadrilateral (or parallelogram) opposite the fulcrum points "A" "B".

In the event that the articulated quadrilateral is a parallelogram (in which mutually opposite sides have equal length), the articulated support mechanism 2 maintains the support portion 3 oriented according to a constant orientation during the movement of the articulated support mechanism 2.

In other words, in these circumstances, during the operation of the glass-cleaning device 1 the support portion 3 would describe exclusively a translation movement over the glass without altering its own inclination.

This would create a roto-translation of the support portion 3 along the aforementioned curved path, without varying the orientation of the support portion 3 itself. The articulated support mechanism 2 comprises an anchorage portion 7 capable of receiving in stably fixed manner the glass-cleaning brush 4.

The anchorage portion 7 can have suitable attachment means (not illustrated), responsible for allowing a stable fixing of a central portion of the glass-cleaning brush to the anchorage portion 7.

Advantageously and originally, anchorage portion 7 is mounted movably on the connecting rod 3 to allow a variation in orientation of the glass-cleaning brush 4 with respect to the connecting rod 3.

In particular, the anchorage portion 7 is hinged to the connecting rod 3 at a hinging point "P" defining an axis of rotation "X" passing through "P" and preferably perpendicular to the connecting rod 3 and the anchorage portion 7.

The axis of rotation "X" is in fact transverse, and preferably perpendicular, to the plane (or more generally to the surface) on which the articulated support mechanism 2 moves this plane is identified as a plane superimposable on the glass on which the articulated support mechanism 2 moves and, preferably, is substantially parallel to the glass itself.

Even more preferably, the axis of rotation "X" is parallel to the axes of rotation defined by the two fulcrum points "A", "B" and is therefore substantially perpendicular to the glass to which the glass-cleaning device 1 is attached.

In this way, by means of the rotation around the axis of rotation "X" it is possible to alter the orientation of the glass-cleaning brush 4, making it fit the sides of the glass and achieving a better adaptation to the shape of the glass itself.

Advantageously and originally, furthermore, the glass-cleaning device 1 comprises movement means 8, active between the connecting rod 3 and the anchorage portion 7 to alter the orientation of the glass-cleaning brush 4 with respect to the connecting rod 3.

Preferably, the movement means continuously, i.e. moment by moment, regulate the orientation of the glass-cleaning brush 4 with respect to the support portion 3 and, consequently, with respect to the perimeter of the glass.

In accordance with the embodiment illustrated in figures 2A-2C, movement means 8 are capable of creating a rotation of the anchorage portion 7 with respect to the connecting rod 3 in a direction of rotation that harmonises with the movement of the connecting rod 3 around the above-mentioned point of attachment to the frame of the vehicle (and therefore around fulcrum points "A", "B").

This is particularly advantageous for the purpose of automatically adapting the orientation of the glass-cleaning brush 4 to the external profile of the glass during the movement of the articulated support mechanism 2.

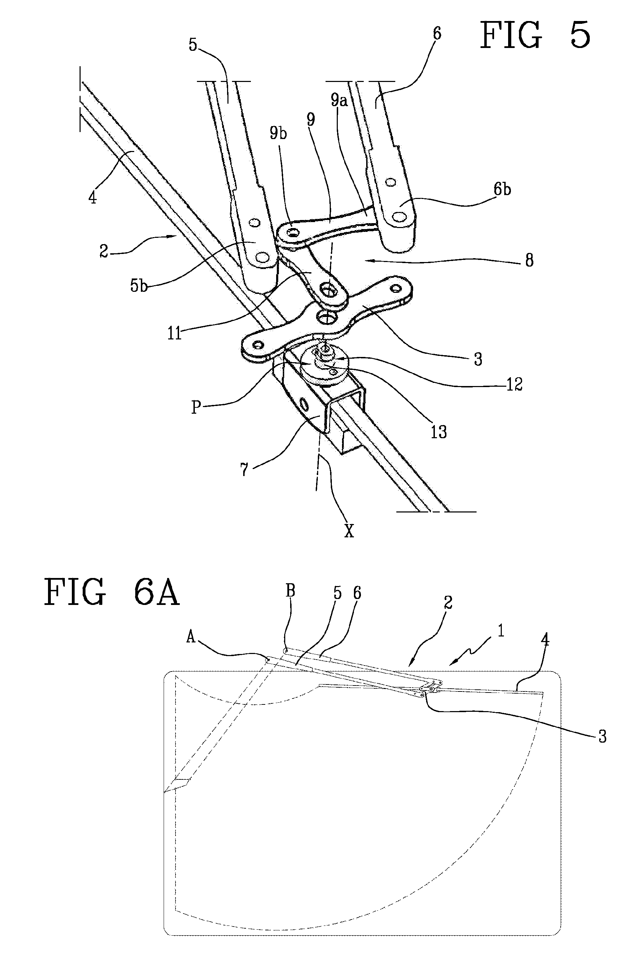

In particular, as may be seen in figures 6A to 6C, the orientability of the glass-cleaning brush 4 is such as to allow the latter to align itself to both inclined sides of a trapezoidal glass.

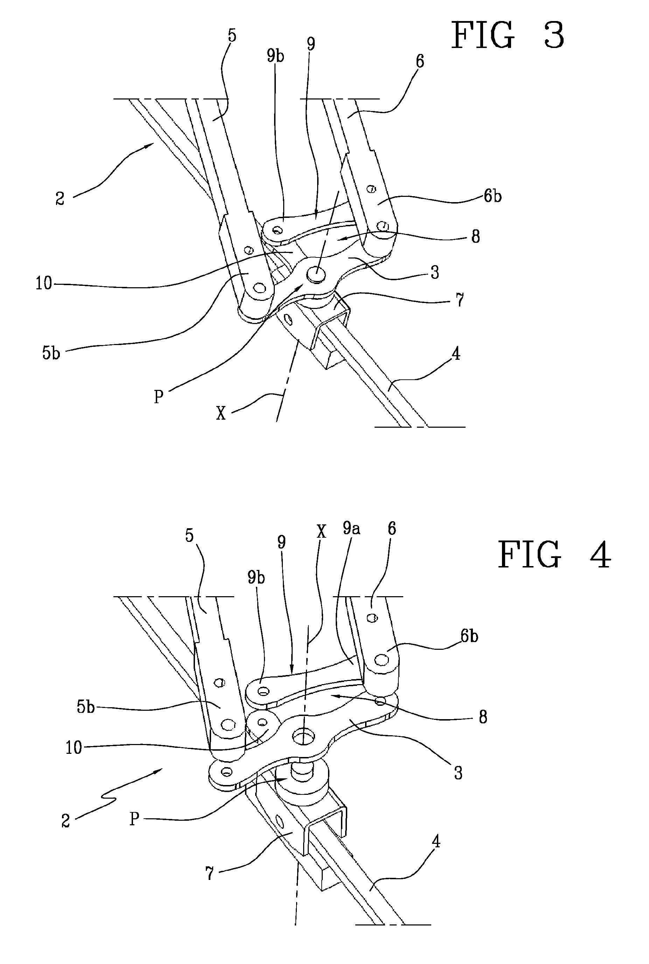

To effect the above-mentioned function on the glass-cleaning brush 4, the movement means 8 are preferably active between one of the two rods 5, 6 of the articulated quadrilateral and the anchorage portion 7. Descending into more detail, and as may be seen in figures 3 to 5, the movement means 8 comprise a guide bar 9 having a first end 9a hinged to one of the above-mentioned two rods 5, 6 and a second end 9b attached to the anchorage portion 7 in an eccentric position with respect to the hinging point (P).

In this way, during the movement of the articulated quadrilateral around the fulcrum points "A" and "B", the guide bar 9, in its turn drawn by the respective rod 5, 6 to which it is connected, draws the anchorage portion 7 making it rotate with respect to the connecting rod 3. From figures 2A-2C it may be noted that the connecting rod 3, the anchorage portion 7, the guide bar 9 and the rod 5, 6 connected to it define a further articulated quadrilateral.

From these figures, furthermore, it may be noted that the angle α formed between the glass-cleaning brush 4 and the straight line joining the hinging points between the rods 5,6 increases as it passes from the configuration in figure 2A to the configuration in figure 2C, and it therefore follows that the anchorage portion 7 (integral with the glass-cleaning brush 4) rotates with respect to the connecting rod 3 in a direction that harmonises with the movement made by the connecting rod in its curved path around the fulcrum points "A", "B".

In other words, in this embodiment the angular excursion of the glass-cleaning brush 4 is greater than the angular excursion of the connecting rod 3.

However, depending on the conformation of the articulated support mechanism 2, it is possible to ensure that the angular excursion of the glass-cleaning brush 4 is less than the angular excursion of the connecting rod 3.

More generally, the concept at the root of the present invention is to allow the angular excursion of the glass-cleaning brush 4 to vary with respect to the angular excursion of the connecting rod 3 in order to obtain greater adaptability of orientation of the glass-cleaning brush 4 to the geometry of the glass.

Figures 3 and 4 show a first embodiment of the movement means 8, in which the second end 9b of the guide bar 9 is directly hinged to the anchorage portion 7, in an eccentric position with respect to the axis of rotation "X" to form a steering system for manoeuvring the anchorage portion 7.

In accordance with this embodiment, the anchorage portion 7 has an eccentric portion 10 with respect to the axis of rotation "X" to which the second end 9b of the guide bar 9 is hinged.

Figure 5 shows a second embodiment of the movement means 8, which comprise a control rod 11 fixable at one end to the anchorage portion 7 and in which the second end 9b of the guide bar 9 is directly pivoted at the other end of the control rod 11.

In greater detail, the control rod 11 is made rotationally integral with the anchorage portion 7 at the hinging point "P" by coupling with the profiled pin 12 (for example with an elliptical section, as may be seen in the exploded view in figure 5).

Preferably, furthermore, in this embodiment the profiled pin 12 is connected concentrically (or in any event axially aligned with respect to the axis of rotation "X") to a cylindrical portion 13 with a circular section of the profiled pin, in which said cylindrical portion forms the pivoting point "P" between support portion 3 and anchorage portion 7.

In other words, the anchorage portion 7 features a pin 12 having a cylindrical part 13 suitable for creating a rotatable connection with support portion 3, and a grooved part suitable for forming a non-rotatable coupling with one end of the control rod 11 which, at its other end, is hinged to the guide bar 9.

The action of the guide bar 9 thus imposes an eccentric thrust on the control rod 11 which draws in rotation the anchorage portion 7 around the axis of rotation "X" with respect to the support portion 3.

Figures 6A-6C show in detail the radius of action of the glass-cleaning device 1 according to the present invention, in terms of area swept by the glass-cleaning brush 4.

Figure 6A shows by a dotted line the area swept by the device according to the invention which, if compared with the area swept by a device with one arm of the known art (figure 1A), shows the greater coverage allowed by the glass-cleaning device 1 according to the invention, which effects an improvement especially at the sides of the glass (in figure 6A we note that the brush 4 can align itself with the left-hand side of the glass, a condition which would not be achievable with the system shown in figure 1A without further penalising the area swept by the brush).

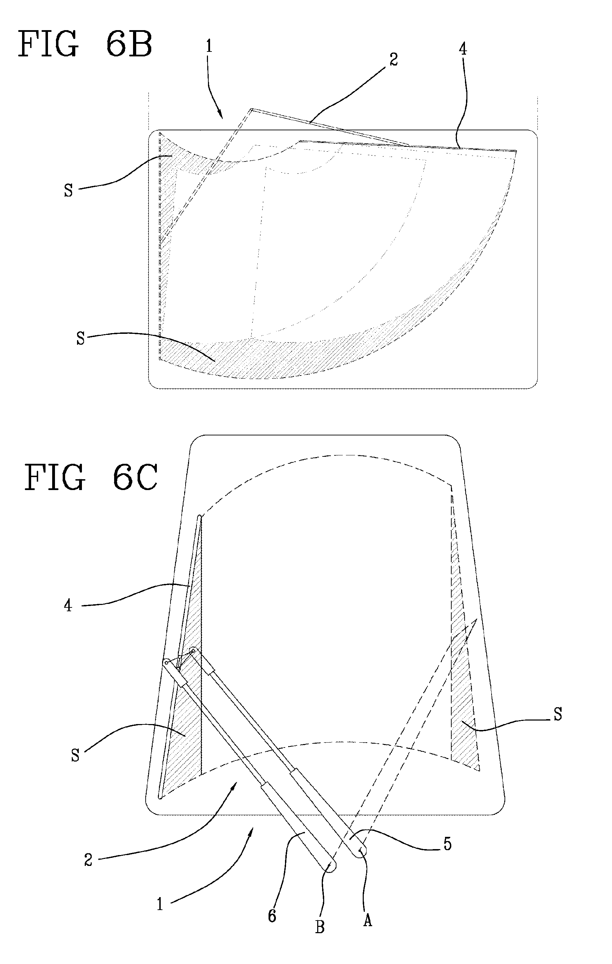

Figure 6B shows a comparison between the area illustrated in figure 6A (bold dotted line) and the area swept by the brush of a glass-cleaning device of known type, with two arms (fine dotted line). It should be noted that, with a single arm (and therefore a single motor), it is possible to achieve a coverage even greater than the situation which would exist with a device with two brushes of known type. The increase in the swept area is shown with special shading and indicated by "S".

Figure 6C shows the improvement in coverage, especially at the sides of the glass, which exists in the case of a glass of trapezoidal shape. The increase in the swept area is shown with special shading and indicated by "S".

The present invention achieves the proposed objects, overcoming the disadvantages complained of in the known art.

The device according to the invention exploits the rotatory motion of an articulated mechanism (a so-called "pantograph" arm) which, through a system of levers, imparts to the brush a further proportional rotation. From the combination of the two rotations (mechanism, with a substantially circular motion, and brush, with a further rotation with respect to the mechanism), a path is obtained which is no longer an arc of a circle, but which has instead an ellipsoidal form.

It follows that the structure of the glass-cleaning device according to the invention makes it possible to increase the portion of the glass on which the brushes act, and this on the one hand allows greater visibility on the part of the driver of the vehicle, and on the other hand allows effective cleaning of the glass with a single arm and a single motor.

Furthermore, the variation in the orientation of the brush with respect to the support portion is achieved by the use of a guide bar which is moved directly by one of the two rods of the articulated support mechanism, and is therefore automatically obtained, once the mechanism itself is set in motion, without the need for further driving means.

In addition, the device according to the invention achieves the cleaning of glasses of large dimensions with a single brush, with the advantage of requiring a motor of very modest power and is therefore more economical.

The presence of a single brush, in fact, on the one hand eliminates wasteful overlaps of the radius of action of two or more brushes, and on the other hand reduces the overall length of the brush compared with systems which use two or more brushes, with the result that the total resistive force is reduced.

Furthermore, the presence of a single articulated quadrilateral (pantograph) moving a single brush makes it possible to dispense with the complicated levers present in known devices for connecting two or more brushes to the motor. This on the one hand reduces the complexity of production, and on the other reduces the overall dimensions, making it possible to fit the glass-cleaning device even in places where there are small spaces (for example at the upper edge of a vehicle windscreen or rear window).

## Claims

1. Glass-cleaning device, comprising an articulated support mechanism (2) having a support portion (3) responsible for carrying a glass-cleaning brush (4), said articulated support mechanism (2) being responsible for moving said support portion (3) around a fulcrum point (A; B),
**characterized in that** said articulated support mechanism (2) comprises an anchorage portion (7), suitable for being stably attached to a glass-cleaning brush (4) and mounted movably on said support portion (3) to allow a variation of orientation of the glass-cleaning brush (4) with respect to said support portion (3), and movement means (8), active between the support portion (3) and the anchorage portion (7) to vary the orientation of the glass-cleaning brush(4) with respect to the support portion (3).

2. Device according to claim 1, wherein said anchorage portion (7) is hinged to said support portion (3) at a hingeing point (P).

3. Device according to claim 1 or 2, wherein said articulated support mechanism (2) comprises an articulated quadrilateral, preferably a parallelogram, having a pair of rods (5, 6) hinged on the one hand to opposite ends of said support portion (3) and hingeable on the other hand to the chassis of a vehicle, said movement means (8) being active between one of said two rods (5, 6) and said anchorage portion (7).

4. Device according to claim 3 when it depends on claim 2, wherein said movement means (8) comprise a guide bar (9) having a first end (9a) hinged to one of said two rods (5, 6) and a second end (9b) attached to said anchorage portion (7) in an eccentric position with respect to said hingeing point (P).

5. Device according to claim 4, wherein said second end (9b) of the guide bar (9) is directly hinged to the anchorage portion (7).

6. Device according to claim 4, wherein said movement means (8) comprise a control rod (11) fixable to said anchorage portion (7) in a position eccentric to said hingeing point (P) and wherein said second end (9b) of the guide bar (9) is directly hinged to said control rod (11).

7. Device according to claim 2, wherein said articulated support mechanism (2) is movable on a plane substantially parallel to a corresponding glass screen of the vehicle on which this glass-cleaning device (1) is fitted, and wherein said anchorage portion (7) is hinged to said support portion (3) so as to rotate around an axis of rotation (X) substantially perpendicular to said plane.
